# EUROPÄISCHE PATENTSCHRIFT

(11) **EP 2 734 400 B1**
(45) Veröffentlichungstag und Bekanntmachung des Hinweises auf die Patenterteilung: **20.07.2016**
(21) Anmeldenummer: 11757249.5
(22) Anmeldetag: 07.09.2011
(51) Int. Cl.: B60L 11/18, H02J 7/00

(54) **LADESTATION**
CHARGING STATION
STATION DE CHARGE

(43) Veröffentlichungstag der Anmeldung: 28.05.2014
(73) Patentinhaber: Siemens Aktiengesellschaft, 80333 München (DE)
(72) Erfinder: GELLERT, Remo, 02977 Hoyerswerda (DE)
(86) Internationale Anmeldenummer: PCT/EP2011/065442
(87) Internationale Veröffentlichungsnummer: WO 2013/034177

(56) Entgegenhaltungen:
- DE-A1-102009 034 886
- DE-A1-102009 034 887
- "IEC 61851-1:2010 - Electric vehicle conductive charging system - Part 1: General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718,

## Beschreibung

Die Erfindung bezieht sich auf eine Ladestation mit den Merkmalen gemäß dem Oberbegriff des Patentanspruchs 1.

Ladestationen dieser Art werden beispielsweise von der Siemens AG unter dem Produktnamen Charge CP700A und CP500A vertrieben. Diese Ladestationen sind mit einem elektrischen Ladeanschluss zum Anschließen eines Ladekabels eines Elektrofahrzeugs ausgestattet und in der Lage, an dem Ladeanschluss eine die elektrische Belastbarkeit des angeschlossenen Ladekabels angebende Belastbarkeitskennung auszulesen. Die Ladestationen weisen Überlastschutzeinrichtungen zum Abschalten des Ladestromes im Überlastfall auf.

Solche Ladestationen sind darüber hinaus beispielsweise auch aus folgenden Dokumenten bekannt:
"IEC 61851-1:2010 - Electric vehicle conductive charging system - Part 1: General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718;
DE 10 2009 034 886 A1 und DE 10 2009 034 887 A1.

Der Erfindung liegt die Aufgabe zugrunde, eine Ladestation anzugeben, die eine zuverlässige Überwachung des Ladevorgangs ermöglicht, aber dennoch kostengünstig herstellbar ist.

Diese Aufgabe wird erfindungsgemäß durch eine Ladestation mit den Merkmalen gemäß Patentanspruch 1 gelöst. Vorteilhafte Ausgestaltungen der erfindungsgemäßen Ladestation sind in Unteransprüchen angegeben.

Ein wesentlicher Vorteil der erfindungsgemäßen Ladestation besteht darin, dass der Ladevorgang mit Hilfe einer einzigen Überlastschutzeinrichtung vollständig überwacht werden kann. Bei der erfindungsgemäßen Ladestation wird nämlich der Ladestrom unabhängig von der Belastbarkeitskennung des Ladekabels stets über ein- und dieselbe ein- oder mehrphasige Speiseleitung zum Ladeanschluss der Ladestation geleitet, so dass durch ein Überwachen eben dieser (zentralen) Speiseleitung eine wirksame Kontrolle des Ladevorgangs mit einer einzigen Überlastschutzeinrichtung möglich ist. Selbstverständlich können, beispielsweise aus Redundanzgründen, noch weitere bzw. zusätzliche Überlastschutzeinrichtungen an eben diese (zentrale) Speiseleitung oder an anderer Stelle angeschlossen werden, wenn dies aus Sicherheitsgründen gewünscht ist.

Besonders einfach und damit vorteilhaft lässt sich eine solche Ladestation herstellen, wenn die Überlastschutzeinrichtung einen Speicher aufweist, in dem die zumindest zwei kennungsindividuellen Auslösekriterien abgespeichert sind.

Die Überlastschutzeinrichtung weist vorzugsweise eine mit dem Speicher verbundene Recheneinrichtung auf, die geeignet ist, anhand der jeweiligen Belastbarkeitskennung des angeschlossenen Ladekabels das mindestens eine dieser Belastbarkeitskennung zugeordnete und in dem Speicher abgespeicherte kennungsindividuelle Auslösekriterium aus dem Speicher auszulesen.

Mit Blick auf eine besonders hohe Ausfallsicherheit wird es als vorteilhaft angesehen, wenn die Überlastschutzeinrichtung unmittelbar mit dem Ladeanschluss in Verbindung steht und geeignet ist, die Belastbarkeitskennung des angeschlossenen Ladekabels selbst (bzw. ohne Vermittlung anderer Komponenten) auszulesen.

Als belastbarkeitsindividuelle Auslösekriterien können beispielsweise Maximalstromwerte, Auslösekennlinien und/oder Berechnungsrichtlinien, die von der Recheneinrichtung beim Auswerten des gemessenen Ladestroms heranzuziehen sind, abgespeichert werden. Der Begriff Auslösekriterium ist also im weitesten Sinne zu verstehen.

Als vorteilhaft wird es angesehen, wenn die Überlastschutzeinrichtung eine mit der Recheneinrichtung in Verbindung stehende Messeinrichtung aufweist, die einen die Belastung der Speiseleitung angebenden Messwert ermittelt und zu der Recheneinrichtung übermittelt. Bei der Messeinrichtung kann es sich beispielsweise um eine Strommesseinrichtung handeln, die den Strom durch die Speiseleitung misst.

Die Speiseleitung kann ein- oder mehrphasig sein. Im Falle einer mehrphasigen Speiseleitung wird es als vorteilhaft angesehen, wenn die selbsttätig umschaltende Überlastschutzeinrichtung eine, mehrere oder alle Phasen der mehrphasigen Speiseleitung überwacht.

Im Falle einer mehrphasigen Speiseleitung wird es als vorteilhaft angesehen, wenn eine phasenindividuelle Überwachung und Steuerung erfolgt. Vorzugsweise ist die Überlastschutzeinrichtung geeignet, ein Abschalten der Phasen der mehrphasigen Speiseleitung unabhängig von der Symmetrie der Strombelastung in den Phasen der Speiseleitung durchzuführen.

Gemäß einer besonders bevorzugten Ausgestaltung ist vorgesehen, dass die Schalteinrichtung für jede Phase der mehrphasigen Speiseleitung einen individuell ansteuerbaren Schalter aufweist und die Überlastschutzeinrichtung derart ausgestaltet ist, dass sie die Phasen der mehrphasigen Speiseleitung individuell überwacht und im Überlastfall individuell abschaltet.

Um eine Fernparametrierung der Überlastschutzeinrichtung zu erreichen, wird es als vorteilhaft angesehen, wenn die Überlastschutzeinrichtung ein Schnittstellenmodul aufweist und die Steuereinrichtung der Überlastschutzeinrichtung derart programmiert ist, dass eine Veränderung der kennungsindividuellen Auslösekriterien durch eine Fernparametrierung möglich ist.

Die Erfindung bezieht sich darüber hinaus auf ein Verfahren zum Überwachen des Ladevorgangs einer Ladestation mit den Merkmalen des Anspruchs 11, an deren elektrischen Ladeanschluss ein eine Belastbarkeitskennung bereitstellendes Ladekabel eines Elektrofahrzeugs angeschlossen ist.

Bezüglich der Vorteile des erfindungsgemäßen Verfahrens sei auf die oben erläuterten Vorteile der erfindungsgemäßen Ladestation verwiesen, da die Vorteile der erfindungsgemäßen Ladestation denen des erfindungsgemäßen Verfahrens im Wesentlichen entsprechen.

Die Erfindung wird nachfolgend anhand von Ausführungsbeispielen näher erläutert; dabei zeigen beispielhaft:
- Figur 1: ein erstes Ausführungsbeispiel für eine Anordnung mit einer erfindungsgemäßen Ladestation, an die über ein Ladekabel ein Elektrofahrzeug angeschlossen ist,
- Figur 2: ein zweites Ausführungsbeispiel für eine Anordnung mit einer erfindungsgemäßen Ladestation, wobei eine Überlastschutzeinrichtung der Ladestation unmittelbar mit einem Kennungsleiter des Ladekabels in Verbindung steht und eine Belastbarkeitskennung des Ladekabels ausliest,
- Figur 3: ein drittes Ausführungsbeispiel für eine Anordnung mit einer erfindungsgemäßen Ladestation, wobei das Aufladen des Elektrofahrzeugs mittels einer Spannungsquelle erfolgt, und
- Figur 4: ein viertes Ausführungsbeispiel für eine Anordnung mit einer erfindungsgemäßen Ladestation, wobei ein dreiphasiges Ladekabel an eine dreiphasige Speiseleitung der Ladestation angeschlossen ist.

In den Figuren werden der Übersicht halber für identische oder vergleichbare Komponenten stets dieselben Bezugszeichen verwendet.

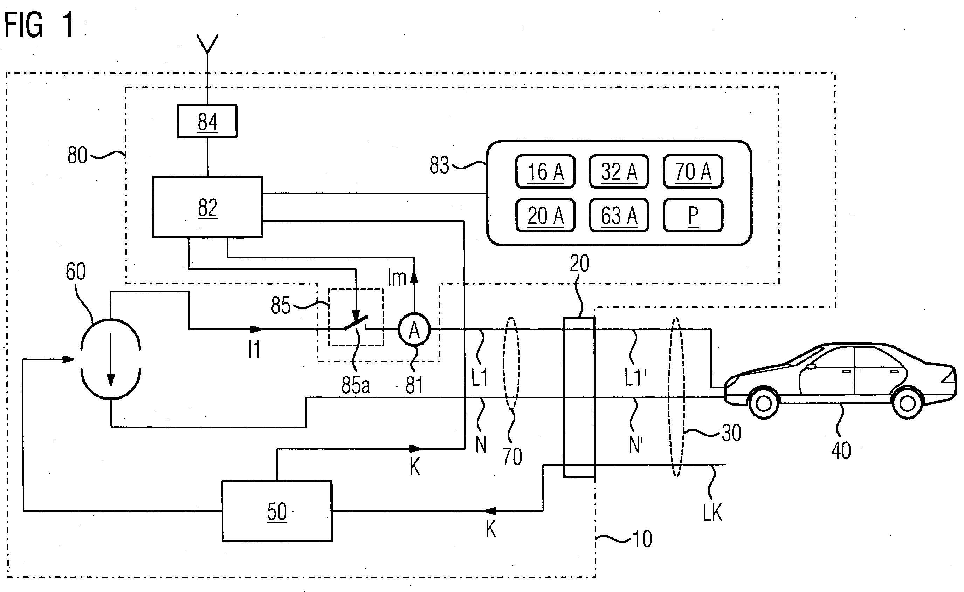

In der Figur 1 erkennt man eine Ladestation 10, die einen Ladeanschluss 20, beispielsweise in Form einer Kabelbuchse, aufweist. An den Ladeanschluss 20 der Ladestation 10 ist ein Ladekabel 30 angeschlossen, das den Ladeanschluss 20 mit einem Elektrofahrzeug 40 elektrisch verbindet. Das Elektrofahrzeug 40 wird über das Ladekabel 30 von der Ladestation 10 aufgeladen.

Die Ladestation 10 umfasst eine Steuereinrichtung 50, die an den Ladeanschluss 20 angeschlossen ist. Die Steuereinrichtung 50 steuert eine steuerbare Stromquelle 60 an, die den zum Laden des Elektrofahrzeugs 40 vorgesehenen Ladestrom I1 erzeugt.

An den Ladeanschluss 20 ist eine Speiseleitung 70 angeschlossen, die den Ladeanschluss 20 mit der steuerbaren Stromquelle 60 verbindet und das Einspeisen des Ladestromes I1 in das Ladekabel 30 ermöglicht. Die Speiseleitung 70 ist bei dem Ausführungsbeispiel gemäß Figur 1 einphasig und weist einen Phasenleiter L1 sowie einen Rückleiter N auf.

Die Figur 1 zeigt, dass das Ladekabel 30 ebenfalls einphasig ist und zwei stromführende Leiter umfasst, die mit den Bezugszeichen L1' und N' bezeichnet sind. Der Leiter L1' ist dabei mit dem Phasenleiter L1 der Speiseleitung 70 und der Leiter N' mit dem Rückleiter N der Speiseleitung 70 verbunden. Das Ladekabel 30 umfasst darüber hinaus einen Kennungsleiter LK, der ein Auslesen einer die elektrische Belastbarkeit des Ladekabels 30 angebenden Belastbarkeitskennung K ermöglicht. Die Belastbarkeitskennung K kann beispielsweise angeben, dass das Ladekabel 30 maximal mit einem Strom von 16 A, 20 A, 32 A, 63 A oder 70 A belastet werden darf.

In der Figur 1 erkennt man darüber hinaus, dass die Ladestation 10 eine Überlastschutzeinrichtung 80 umfasst, die an die Speiseleitung 70 angeschlossen ist. Die Überlastschutzeinrichtung 80 umfasst eine Strommesseinrichtung 81, die den Strom im Phasenleiter L1 der Speiseleitung 70 misst und einen entsprechenden Strommesswert Im erzeugt. An die Strommesseinrichtung 81 ist eine Recheneinrichtung 82 der Überlastschutzeinrichtung 80 angeschlossen. Mit dieser Recheneinrichtung 82 steht ein Speicher 83 in Verbindung, in dem ein Programmmodul P gespeichert ist. Das Programmmodul P enthält das Steuerprogramm, das die Arbeitsweise der Recheneinrichtung 82 zum Überwachen der Ladestation 10 definiert.

Neben dem Programmmodul P sind in dem Speicher 83 kennungsindividuelle Auslösekriterien abgespeichert, die mit den Bezugszeichen I16A, I20A, I32A, I63A und I70A gekennzeichnet sind. Bei den kennzeichnungsindividuellen Auslösekriterien kann es sich beispielsweise um Auslösekennlinien oder Auslösekurven sowie alternativ um Maximalwerte, wie beispielsweise Maximalstromwerte, Maximalleistungswerte oder Maximalenergiewerte, handeln.

Die Überlastschutzeinrichtung 80 umfasst darüber hinaus ein Schnittstellenmodul 84, das mit der Recheneinrichtung 82 in Verbindung steht. Das Schnittstellenmodul 84 ermöglicht eine Fernparametrierung der Überlastschutzeinrichtung 80: Beispielsweise kann über das Schnittstellenmodul 84 das Programmmodul P und damit die Arbeitsweise der Recheneinrichtung 82 von außen fernparametriert werden. Zusätzlich oder alternativ ist es möglich, die kennzeichnungsindividuellen Auslösekriterien I16A bis I70A durch andere kennungsindividuelle Auslösekriterien zu ersetzen, wenn dies nötig oder vorteilhaft erscheint.

Die Überlastschutzeinrichtung 80 ist darüber hinaus mit einer Schalteinrichtung 85 ausgestattet, die einen Schalter 85a umfasst. Der Schalter 85a ist an den Phasenleiter L1 der Speiseleitung 70 angeschlossen und in der Lage, den Ladestrom I1 durch den Phasenleiter L1 und damit den Ladestrom durch die Speiseleitung 70 insgesamt abzuschalten, wenn ein entsprechendes Steuersignal ST von der Recheneinrichtung 82 erzeugt wird.

Die Anordnung gemäß Figur 1 lasst sich beispielsweise wie folgt betreiben:
Nachdem das Ladekabel 30 an den Ladeanschluss 20 der Ladestation 10 angeschlossen worden ist und somit eine elektrische Verbindung zwischen dem Elektrofahrzeug 40 und der Ladestation 10 hergestellt worden ist, kann die Steuereinrichtung 50 die Belastbarkeitskennung K aus dem an dem Ladeanschluss 20 angeschlossenen Kennungsleiter LK des Ladekabels 30 auslesen. Die Belastbarkeitskennung K kann beispielsweise angeben, mit welchem maximalen Ladestrom das Ladekabel 30 belastet werden kann. Im Nachfolgenden wird beispielhaft davon ausgegangen, dass die Belastbarkeitskennung K einen maximalen Ladestrom von 32 A anzeigt. Die Steuereinrichtung 50 wird somit die steuerbare Stromquelle 60 derart ansteuern, dass der Ladestrom I1 den maximal vorgegebenen Ladestrom von 32 A gar nicht oder zumindest nicht dauerhaft überschreitet.

Während des Ladevorgangs wird die Überlastschutzeinrichtung 80 den Ladevorgang parallel bzw. zusätzlich überwachen und den Ladevorgang mit Hilfe der Schalteinrichtung 85 bzw. mit Hilfe des Schalters 85a unterbrechen, wenn der maximale Ladestrom von 32 A zeitweise oder länger als eine vorgegebene Zeitspanne überschritten wird. Hierzu wird die Recheneinrichtung 82 aus der Steuereinrichtung 50 die Belastbarkeitskennung K auslesen, die die Belastbarkeit des Ladekabels 30 angibt. Anhand der Belastbarkeitskennung K wird die Recheneinrichtung 82 wiederum den Speicher 83 auslesen und ein der Belastbarkeitskennung K entsprechendes kennungsindividuelles Auslösekriterium aus dem Speicher 83 auslesen. Da die Belastbarkeitskennung K einen Maximalstrom von 32 A angibt, wird die Recheneinrichtung 82 bei dem Ausführungsbeispiel gemäß der Figur 1 das kennungsindividuelle Auslösekriterium I32A aus dem Speicher 83 auslesen und zur Auswertung des Strommesswertes Im verwenden.

Die Recheneinrichtung 82 wird die Strommesswerte Im anhand des ausgelesenen kennungsindividuellen Auslösekriteriums I32A auswerten und prüfen, ob das Ladekabel 30 überlastet wird. Im einfachsten Fall kann die Recheneinrichtung 82 die Schalteinrichtung 85 immer dann betätigen, wenn der Strommesswert Im einen Ladestrom angibt, der über dem Maximalstromwert von 32 A liegt. Als besonders vorteilhaft wird es jedoch angesehen, wenn die Recheneinrichtung 82 im Falle eines Überschreitens des Maximalstromwerts von 32 A den Ladevorgang nicht sofort unterbricht, sondern zunächst abwartet, ob der Ladestrom I1 dauerhaft bzw. anhaltend den Maximalstromwert von 32 A überschreitet. Beispielsweise kann die Recheneinrichtung 82 den Strommesswert Im über ein vorgegebenes Zeitfenster integrieren und ein Steuersignal ST zum Ausschalten des Schalters 85a nur dann erzeugen, wenn das Integral einen vorgegebenen Grenzwert überschreitet. Die Art der Auswertung der Strommesswerte Im und die Vorgehensweise beim Erzeugen des Steuersignals ST zum Abschalten des Schalters 85a sind durch das kennungsindividuelle Auslösekriterium (oder die kennungsindividuellen Auslösekriterien) I32A festgelegt. Das Auslösekriterium I32A kann Grenzwerte, wie beispielsweise maximale Stromwerte oder maximale Integralwerte enthalten sowie Rechenvorschriften, die auf die Messwerte Im anzuwenden sind, um eine Entscheidung über das Fortsetzen oder das Abbrechen des Ladevorgangs herbeizuführen. Der Begriff Auslösekriterium ist also im weitesten Sinne zu verstehen.

Stellt die Recheneinrichtung 82 bei der Anwendung des Auslösekriteriums I32A auf die Strommesswerte Im fest, dass das Ladekabel 30 überlastet wird, so wird sie ein Steuersignal ST erzeugen, mit dem der Schalter 85a der Schalteinrichtung 85 geöffnet und der Ladevorgang unterbrochen wird.

Wie sich den obigen Ausführungen entnehmen lässt, zeichnet sich die Ladestation 10 gemäß Figur 1 dadurch aus, dass mit einer einzigen Überlastschutzeinrichtung 80 die Überwachung des Ladevorganges vorgenommen werden kann, obwohl die Ladevorgänge mit unterschiedlichen Ladeströmen unter Heranziehung unterschiedlicher Belastbarkeitskennungen K durchgeführt werden können. Dies ist möglich, weil die Überlastschutzeinrichtung 80 an die zentrale Speiseleitung 70 angeschlossen ist und eine Überwachung der Speiseleitung 70 in Abhängigkeit von der jeweiligen Belastbarkeitskennung K durchführt.

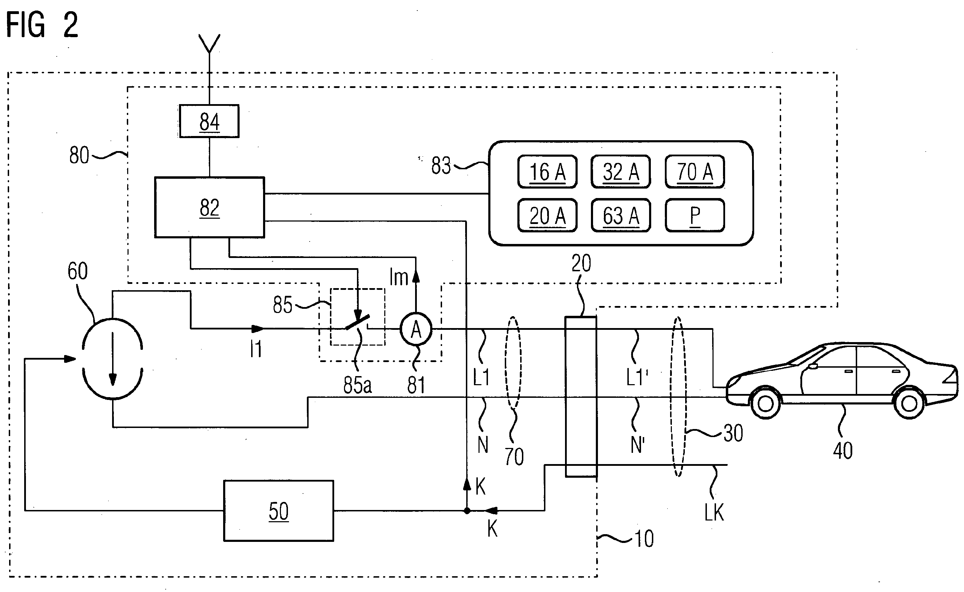

Die Figur 2 zeigt eine Anordnung mit einer Ladestation 10, bei der die Überlastschutzeinrichtung 80 unmittelbar mit dem Ladeanschluss 20 der Ladestation 10 in Verbindung steht, so dass der Kennungsleiter LK des Ladekabels 30 an die Überlastschutzeinrichtung 80 angeschlossen werden kann. Dies ermöglicht es der Überlastschutzeinrichtung 80, die Belastbarkeitskennung K direkt aus dem Ladekabel 30 auszulesen und unabhängig von der Steuereinrichtung 50 eine belastbarkeitskennungsindividuelle Überwachung der Speiseleitung 70 vorzunehmen.

Im Unterschied zu dem Ausführungsbeispiel gemäß Figur 1 kann die Überlastschutzeinrichtung 80 also die Speiseleitung 70 unter individueller Berücksichtigung der Belastbarkeit des Ladekabels 30 überwachen, ohne dass es einer Mitwirkung der Steuereinrichtung 50 bedarf. Selbst wenn also die Steuereinrichtung 50 mangelhaft arbeitet oder völlig defekt ist, kann die Überlastschutzeinrichtung 80 verhindern, dass ein zu hoher Ladestrom I1 in das Ladekabel 30 eingespeist wird; denn im Unterschied zu der Ausführungsform gemäß Figur 1 ist die Überlastschutzeinrichtung 80 gemäß Figur 2 hinsichtlich des Erhalts der Belastbarkeitskennung K nicht von der Mitwirkung der Steuereinrichtung 50 abhängig.

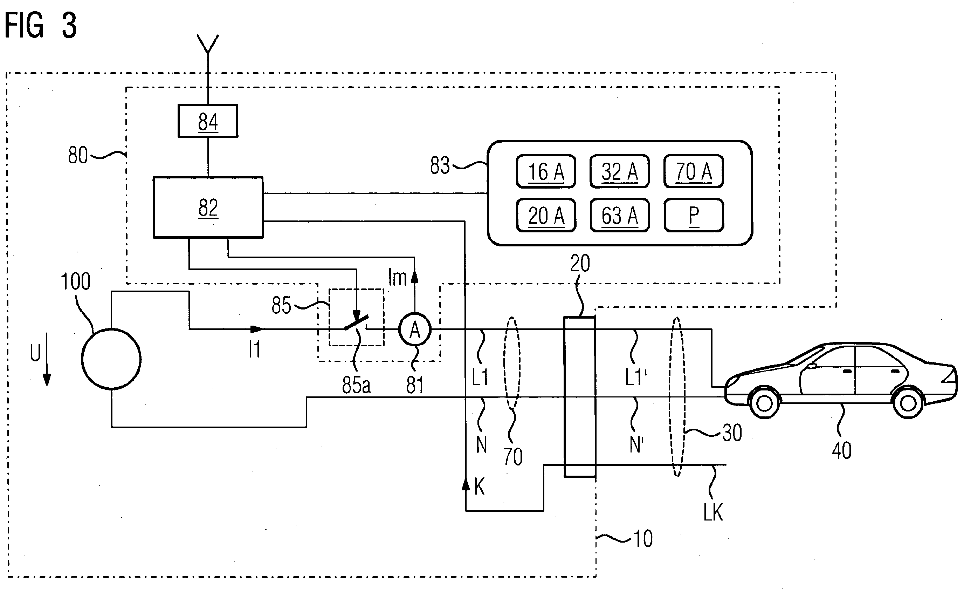

Die Figur 3 zeigt ein Ausführungsbeispiel für eine Anordnung mit einer Ladestation 10 und einem Elektrofahrzeug 40, bei der das Aufladen des Elektrofahrzeugs 40 mit Hilfe einer Spannungsquelle 100 erfolgt. Sobald also das Ladekabel 30 das Elektrofahrzeug 40 mit der Ladestation 10 verbindet, wird ein Ladestrom I1 von der Spannungsquelle 100 in Richtung Elektrofahrzeug 40 fließen. Die Überwachung des Ladevorgangs erfolgt hier allein über die Überlastschutzeinrichtung 80, die die Belastbarkeitskennung K, die die Belastbarkeit des Ladekabels 30 angibt, über den Kennungsleiter LK des Ladekabels 30 ausliest.

Die Recheneinrichtung 82 der Überlastschutzeinrichtung 80 kann somit, wie dies im Detail im Zusammenhang mit der Figur 1 beschrieben worden ist, den Ladestrom I1 überwachen und bei Überschreiten eines in dem Speicher 83 abgespeicherten kennungsindividuellen Auslösekriteriums den Schalter 85a der Schalteinrichtung 85 öffnen, wenn die aufgenommenen Strommesswerte Im gemäß dem oder den kennungsindividuellen Auslösekriterien zu hoch sind und eine Überlastung des Ladekabels auftritt oder droht.

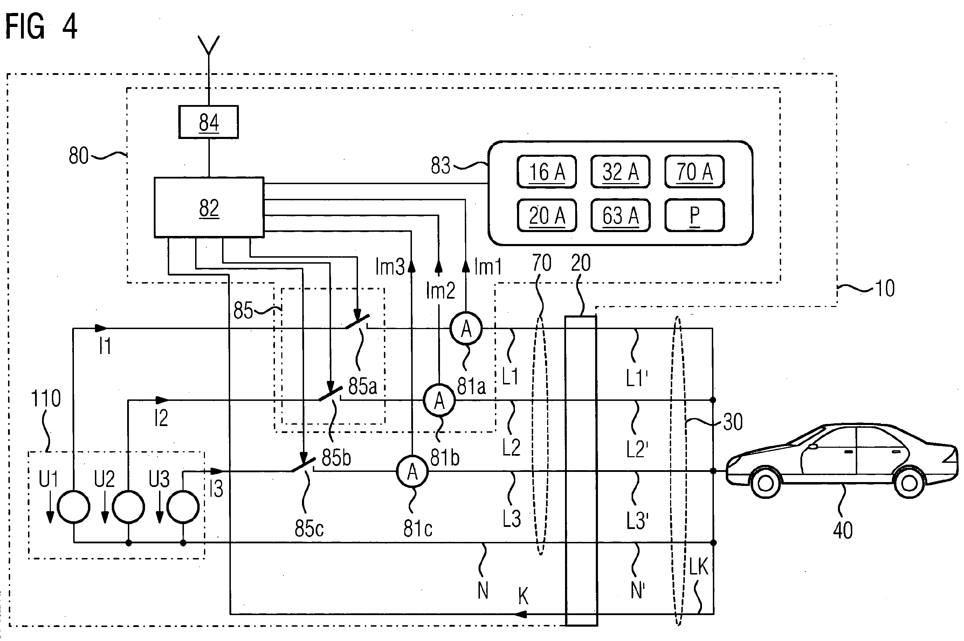

Die Figur 4 zeigt ein Ausführungsbeispiel, bei dem das Ladekabel 30 dreiphasig ist und drei stromführende Phasenleiter L1', L2' und L3' sowie einen Rückleiter N' umfasst. Zusätzlich zu den genannten vier Leitern ist ein Kennungsleiter LK vorhanden, der ein Auslesen einer Belastbarkeitskennung K ermöglicht.

Der Ladeanschluss 20 der Ladestation 10 ist demgemäß ebenfalls für einen dreiphasigen Anschluss ausgelegt. So lässt sich in der Figur 4 erkennen, dass an den Ladeanschluss 20 eine dreiphasige Speiseleitung 70 angeschlossen ist, die drei Phasenleiter L1, L2 und L3 sowie einen Rückleiter N umfasst. Über diese dreiphasige Speiseleitung 70 steht der Ladeanschluss 20 mit einer dreiphasigen Strom- oder Spannungsquelle 110 in Verbindung, die ungesteuert (oder alternativ gesteuert durch eine in der Figur 4 nicht gezeigte Steuereinrichtung) den Ladestrom in Form von Phasenströmen I1, I2 und I3 über die dreiphasige Speiseleitung 70 und den Ladeanschluss 20 in das Ladekabel 30 und damit das Elektrofahrzeug 40 einspeist.

Im Unterschied zu den Ausführungsbeispielen gemäß den Figuren 1 bis 3 ist die Überlastschutzeinrichtung 80 gemäß Figur 4 ebenfalls dreiphasig ausgeführt. Sie umfasst drei Strommesseinrichtungen 81a, 81b und 81c, die in den Phasenleitern L1, L2 und L3 der Speiseleitung 70 angeordnet sind. Die von den Strommesseinrichtungen gemessenen phasenindividuellen Strommesswerte Im1, Im2 und Im3 gelangen zu der Recheneinrichtung 82, die diese phasenindividuell auswertet. Dabei zieht die Recheneinrichtung 82 die Belastbarkeitskennung K heran, die sie unmittelbar von dem Ladeanschluss 20 bzw. von dem Kennungsleiter LK des Ladekabels 30 erhält.

Auch bei dem Ausführungsbeispiel gemäß Figur 4 besteht also eine unmittelbare Verbindung zwischen der Überlastschutzeinrichtung 80 und dem Ladeanschluss 20, um ein unmittelbares Auslesen der Belastbarkeitskennung K durch die Überlastschutzeinrichtung 80 ohne Vermittlung anderer Komponenten der Ladestation 10 zu ermöglichen.

Stellt die Recheneinrichtung 82 nach Auslesen des oder der kennungsindividuellen Auslösekriterien fest, dass die Phasenstrommesswerte Im1, Im2 und/oder Im3 zu hoch sind, so wird sie den Ladevorgang unterbrechen, indem sie entweder nur die von der Überlast betroffenen Phasenleiter L1, L2 und/oder L3 abschaltet oder alternativ den gesamten Ladevorgang unterbricht, indem sie alle Phasenleiter L1, L2 und L3 abschaltet, auch wenn nur einzelne Phasenleiter betroffen sind.

Zum Abschalten einzelner Phasenleiter oder aller Phasenleiter ist die Überlastschutzeinrichtung 80 gemäß Figur 4 mit einer Schalteinrichtung 85 ausgestattet, die insgesamt drei Schalter 85a, 85b und 85c umfasst. Die drei Schalter sind jeweils einem Phasenleiter der Speiseleitung 70 zugeordnet und ermöglichen ein phasenindividuelles Abschalten der Speiseleitung 70.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ladestation (10) mit
- einem elektrischen Ladeanschluss (20) zum Anschließen eines Ladekabels (30) eines Elektrofahrzeugs (40), und
- einer Überlastschutzeinrichtung (80) mit einer Schalteinrichtung (85) zum Abschalten eines durch die Überlastschutzeinrichtung (80) fließenden Ladestromes (I1-I3) im Überlastfall,
- wobei die Ladestation (10) geeignet ist, an dem Ladeanschluss (20) eine die elektrische Belastbarkeit des Ladekabels (30) angebende Belastbarkeitskennung (K) auszulesen,
- an den Ladeanschluss (20) der Ladestation (10) eine ein- oder mehrphasige Speiseleitung (70) angeschlossen ist, über die der Ladestrom (I1-I3) unabhängig von der Belastbarkeitskennung (K) des Ladekabels (30) zum Ladeanschluss (20) der Ladestation (10) fließt,
- die Überlastschutzeinrichtung (80) an die Speiseleitung (70) angeschlossen ist und diese überwacht, und
- die Überlastschutzeinrichtung (80) eine selbsttätig umschaltende Überlastschutzeinrichtung (80) ist, wobei
- in der Überlastschutzeinrichtung (80) für zumindest zwei Belastbarkeitskennungen (K) des Ladekabels (30) jeweils mindestens ein Maximalstromwert als kennungsindividuelles Auslösekriterium (I16A-I70A) abgespeichert ist, und
- die Überlastschutzeinrichtung (80) geeignet ist, in Abhängigkeit von der Belastbarkeitskennung (K) des Ladekabels (30) selbsttätig das mindestens eine der Belastbarkeitskennung (K) zugeordnete kennungsindividuelle Auslösekriterium (I16A-I70A) auszuwählen und eine in der Speiseleitung (70) angeordnete Schalteinrichtung (85) der Überlastschutzeinrichtung (80) in Abhängigkeit von dem ausgewählten Auslösekriterium (I16A-I70A) abzuschalten, **dadurch gekennzeichnet, dass** die Überlastschutzeinrichtung dazu eingerichtet ist, die in der Speiseleitung (70) angeordnete Schalteinrichtung (85) erst dann zu aktivieren, wenn der Maximalstromwert länger als eine vorgegebene Zeitspanne überschritten wird.

2. Ladestation (10) nach Anspruch 1, **dadurch gekennzeichnet, dass**
- die Überlastschutzeinrichtung (80) einen Speicher (83) aufweist, in dem die zumindest zwei kennungsindividuellen Auslösekriterien (I16A-I70A) abgespeichert sind, und
- die Überlastschutzeinrichtung (80) eine mit dem Speicher (83) verbundene Recheneinrichtung (82) aufweist, die geeignet ist, anhand der jeweiligen Belastbarkeitskennung (K) des angeschlossenen Ladekabels (30) das mindestens eine dieser Belastbarkeitskennung (K) zugeordnete und in dem Speicher (83) abgespeicherte kennungsindividuelle Auslösekriterium (I16A-I70A) aus dem Speicher (83) auszulesen.

3. Ladestation (10) nach einem der voranstehenden Ansprüche, **dadurch gekennzeichnet, dass** die Überlastschutzeinrichtung (80) unmittelbar mit dem Ladeanschluss (20) in Verbindung steht und die Belastbarkeitskennung (K) des angeschlossenen Ladekabels (30) selbst auslesen kann.

4. Ladestation (10) nach einem der voranstehenden Ansprüche 2 oder 3, **dadurch gekennzeichnet, dass** als belastbarkeitskennungsindividuelle Auslösekriterien (I16A-I70A) Maximalstromwerte, Auslösekennlinien und/oder Berechnungsrichtlinien abgespeichert sind.

5. Ladestation (10) nach einem der voranstehenden Ansprüche, **dadurch gekennzeichnet, dass** die Überlastschutzeinrichtung (80) eine mit der Recheneinrichtung (82) in Verbindung stehende Messeinrichtung (81a-81c) aufweist, die einen die Belastung der Speiseleitung (70) angebenden Messwert (Im1-Im3) ermittelt und zu der Recheneinrichtung (82) übermittelt.

6. Ladestation (10) nach Anspruch 5,
**dadurch gekennzeichnet, dass** die Messeinrichtung eine Strommesseinrichtung (81) ist, die den Strom durch die Speiseleitung (70) misst.

7. Ladestation (10) nach einem der voranstehenden Ansprüche, **dadurch gekennzeichnet, dass**
- die Speiseleitung (70) mehrphasig ist und
- die selbsttätig umschaltende Überlastschutzeinrichtung (80) eine, mehrere oder alle Phasen der mehrphasigen Speiseleitung (70) überwacht.

8. Ladestation (10) nach Anspruch 7,
**dadurch gekennzeichnet, dass**
- die Schalteinrichtung (85) für jede Phase der mehrphasigen Speiseleitung (70) einen individuell ansteuerbaren Schalter (85a-85c) aufweist und
- die Überlastschutzeinrichtung (80) derart ausgestaltet ist, dass sie die Phasen der mehrphasigen Speiseleitung (70) individuell überwacht und im Überlastfall individuell abschaltet.

9. Ladestation (10) nach einem der voranstehenden Ansprüche 7 oder 8,
**dadurch gekennzeichnet, dass** die Überlastschutzeinrichtung (80) geeignet ist, ein Abschalten der Phasen der mehrphasigen Speiseleitung (70) unabhängig von der Symmetrie der Strombelastung in den Phasen der Speiseleitung (70) durchzuführen.

10. Ladestation (10) nach einem der voranstehenden Ansprüche, **dadurch gekennzeichnet, dass**
- die Überlastschutzeinrichtung (80) ein Schnittstellenmodul (84) aufweist und
- die Steuereinrichtung (50) der Überlastschutzeinrichtung. (80) derart mit dem Schnittstellenmodul (84) verbunden ist, dass eine Veränderung der kennungsindividuellen Auslösekriterien (I16A-I70A) über das Schnittstellenmodul (84) durch eine Fernparametrierung möglich ist.

11. Verfahren zum Überwachen des Ladevorgangs einer Lädestation (10),
- an deren elektrischen Ladeanschluss (20) ein eine Belastbarkeitskennung (K) bereitstellendes Ladekabel (30) eines Elektrofahrzeugs (40) angeschlossen ist, und
- von der eine Speiseleitung (70), die an den Ladeanschluss (20) der Ladestation (10) angeschlossen ist und über die der Ladestrom (I) unabhängig von der Belastbarkeitskennung (K) des Ladekabels (30) zum Ladeanschluss (20) der Ladestation (10) fließt, mit einer selbsttätig umschaltenden Überlastschutzeinrichtung (80) überwacht wird, wobei
- in Abhängigkeit von der Belastbarkeitskennung (K) des Ladekabels (30) ein der Belastbarkeitskennung (K) zugeordneter Maximalstromwert als kennungsindividuelles Auslösekriterium (I16A-I70A) aus einem Speicher (83) der Überlastschutzeinrichtung (80) ausgelesen wird und eine in der Speiseleitung (70) angeordnete Schalteinrichtung (85) im Überlastfall, der mit der Überlastschutzeinrichtung (80) gemäß dem ausgewählten Auslösekriterium (I16A-I70A) bestimmt wird, abgeschaltet wird, **dadurch gekennzeichnet, dass** die Überlastschutzeinrichtung die in der Speiseleitung (70) angeordnete Schalteinrichtung (85) erst dann aktiviert, wenn der Maximalstromwert länger als eine vorgegebene Zeitspanne überschritten wird.

## Claims

1. Charging station (10) having
- an electric charging connection (20) for connecting a charging cable (30) of an electric vehicle (40) and
- an overload protection device (80) having a switching device (85) for disconnecting a charging current (I1-I3) flowing through the overload protection device (80) in the event of an overload,
- wherein the charging station (10) is suitable for reading, at the charging connection (20), a load capacity identifier (K) specifying the electrical load capacity of the charging cable (30),
- a single-phase or polyphase feed line (70) is connected to the charging connection (20) of the charging station (10), via which feed line the charging current (I1-I3) flows, regardless of the load capacity identifier (K) of the charging cable (30), to the charging connection (20) of the charging station (10),
- the overload protection device (80) is connected to the feed line (70) and monitors same, and
- the overload protection device (80) is an overload protection device (80) with automatic switchover, wherein
- in each case at least one maximum current value is stored as identifier-specific tripping criterion (I16A-I70A) in the overload protection device (80) for at least two load capacity identifiers (K) of the charging cable (30), and
- the overload protection device (80) is suitable for automatically selecting, on the basis of the load capacity identifier (K) of the charging cable (30), the at least one identifier-specific tripping criterion (I16A-I70A) assigned to the load capacity identifier (K) and for disconnecting a switching device (85), arranged in the feed line (70), of the overload protection device (80) on the basis of the selected tripping criterion (I16A-I70A), **characterized in that** the overload protection device is set up to activate the switching device (85) arranged in the feed line (70) only when the maximum current value is exceeded for longer than a predetermined time period.

2. Charging station (10) according to Claim 1,
**characterized in that**
- the overload protection device (80) has a memory (83) in which the at least two identifier-specific tripping criteria (I16A-I70A) are stored, and
- the overload protection device (80) has a calculation device (82) which is connected to the memory (83) and is suitable for reading from the memory (83), on the basis of the respective load capacity identifier (K) of the connected charging cable (30), the at least one identifier-specific tripping criterion (I16A-I70A) which is assigned to said load capacity identifier (K) and stored in the memory (83).

3. Charging station (10) according to one of the preceding claims,
**characterized in that**
the overload protection device (80) is directly connected to the charging connection (20) and can read the load capacity identifier (K) of the connected charging cable (30) by itself.

4. Charging station (10) according to one of the preceding Claims 2 and 3,
**characterized in that**
maximum current values, tripping characteristics and/or calculation guidelines are stored as load-capacity-identifier-specific tripping criteria (I16A-I70A).

5. Charging station (10) according to one of the preceding claims,
**characterized in that**
the overload protection device (80) has a measuring device (81a-81c) which is connected to the calculation device (82) and determines a measured value (Im1-Im3), which specifies the loading of the feed line (70), and transfers said measured value to the calculation device (82).

6. Charging station (10) according to Claim 5,
**characterized in that**
the measuring device is a current measuring device (81) which measures the current through the feed line (70).

7. Charging station (10) according to one of the preceding claims,
**characterized in that**
- the feed line (70) is a polyphase feed line, and
- the overload protection device (80) with automatic switchover monitors one, several or all of the phases of the polyphase feed line (70).

8. Charging station (10) according to Claim 7,
**characterized in that**
- the switching device (85) has an individually actuable switch (85a-85c) for each phase of the polyphase feed line (70), and
- the overload protection device (80) is configured such that it individually monitors the phases of the polyphase feed line (70) and individually disconnects them in the event of an overload.

9. Charging station (10) according to one of the preceding Claims 7 and 8,
**characterized in that**
the overload protection device (80) is suitable for disconnecting the phases of the polyphase feed line (70) regardless of the symmetry of the current loading in the phases of the feed line (70).

10. Charging station (10) according to one of the preceding claims,
**characterized in that**
- the overload protection device (80) has an interface module (84), and
- the control device (50) of the overload protection device (80) is connected to the interface module (84) such that it is possible to change the identifier-specific tripping criteria (I16A-I70A) by remote parameter setting via the interface module (84).

11. Method for monitoring the charging process of a charging station (10)
- a charging cable (30), which provides a load capacity identifier (K), of an electric vehicle (40) being connected to the electric charging connection (20) of said charging station, and
- a feed line (70), which is connected to the charging connection (20) of the charging station (10) and via which the charging current (I) flows, regardless of the load capacity identifier (K) of the charging cable (30), to the charging connection (20) of the charging station (10), being monitored using an overload protection device (80) with automatic switchover by said charging station, wherein
- on the basis of the load capacity identifier (K) of the charging cable (30), a maximum current value as identifier-specific tripping criterion (I16A-I70A), which value is assigned to the load capacity identifier (K), is read from a memory (83) of the overload protection device (80) and a switching device (85) arranged in the feed line (70) is disconnected in the event of an overload, which is determined by the overload protection device (80) according to the selected tripping criterion (I16A-I70A), **characterized in that** the overload protection device activates the switching device (85) arranged in the feed line (70) only when the maximum current value is exceeded for longer than a predetermined time period.

## Revendications

1. Station de charge (10) comprenant
- une prise de charge électrique (20) destinée au raccordement d'un câble de charge (30) d'un véhicule électrique (40), et
- un dispositif de protection contre les surcharges (80) avec un dispositif de commutation (85) destiné à la coupure d'un courant de charge (I1-I3) circulant à travers le dispositif de protection contre les surcharges (80) en cas de surcharge,
- dans laquelle la station de charge (10) est adaptée pour lire au niveau de la prise de charge (20) une caractéristique de capacité de charge (K) indiquant la capacité de charge électrique du câble de charge (30),
- au niveau de la prise de charge (20) de la station de charge (10) est raccordée une ligne d'alimentation monophasée ou polyphasée (70), via laquelle le courant de charge (I1-I3) circule indépendamment de la caractéristique de capacité de charge (K) du câble de charge (30) vers la prise de charge (20) de la station de charge (10),
- le dispositif de protection contre les surcharges (80) est raccordé à la ligne d'alimentation (70) et la surveille, et
- le dispositif de protection contre les surcharges (80) est un dispositif de protection contre les surcharges à commutation automatique (80), dans laquelle
- dans le dispositif de protection contre les surcharges (80) est stockée respectivement une valeur de courant maximale en tant que critère de déclenchement individuel de caractéristique (I16A-I70A) pour au moins deux caractéristiques de capacité de charge (K) du câble de charge (30), et
- le dispositif de protection contre les surcharges (80) est adapté pour sélectionner en fonction de la caractéristique de capacité de charge (K) du câble de charge (30) automatiquement l'au moins un critère de déclenchement individuel de caractéristique (I16A-I70A) associé à une caractéristique de capacité de charge (K) et pour mettre hors tension un dispositif de commutation (85), disposé dans la ligne d'alimentation (70), du dispositif de protection contre les surcharges (80) en fonction du critère de déclenchement sélectionné (I16AI70A), **caractérisée en ce que** le dispositif de protection contre les surcharges est conçu pour n'activer le dispositif de commutation (85) disposé dans la ligne d'alimentation (70) que lorsque la valeur de courant maximale est dépassée plus longtemps qu'un intervalle de temps prédéfini.

2. Station de charge (10) selon la revendication 1, **caractérisée en ce que**
- le dispositif de protection contre les surcharges (80) présente une unité de stockage (83), dans laquelle les au moins deux critères de déclenchement individuels de caractéristique (I16A-I70A) sont stockés, et
- le dispositif de protection contre les surcharges (80) présente un dispositif de calcul (82) relié à l'unité de stockage (83), qui est adapté pour lire à l'aide de la caractéristique de capacité de charge respective (K) du câble de charge raccordé (30) l'au moins un critère de déclenchement individuel de caractéristique (I16A-I70A) associé à cette caractéristique de capacité de charge (K) et stocké dans l'unité de stockage (83).

3. Station de charge (10) selon l'une des revendications précédentes,
**caractérisée en ce que**
le dispositif de protection contre les surcharges (80) est directement en liaison avec la prise de charge (20) et peut lire lui-même la caractéristique de capacité de charge (K) du câble de charge raccordé (30).

4. Station de charge (10) selon l'une des revendications précédentes 2 ou 3,
**caractérisée en ce que**
des valeurs de courant maximales, des lignes caractéristiques de déclenchement et/ou des directives de calcul sont stockées en tant que critères de déclenchement individuels de caractéristique de capacité de charge (I16A-I70A).

5. Station de charge (10) selon l'une des revendications précédentes,
**caractérisée en ce que**
le dispositif de protection contre les surcharges (80) présente un dispositif de mesure (81a-81c) en liaison avec le dispositif de calcul (82), qui détermine une valeur de mesure (Im1-Im3) indiquant la charge de la ligne d'alimentation (70) et la transmet au dispositif de calcul (82).

6. Station de charge (10) selon la revendication 5,
**caractérisée en ce que**
le dispositif de mesure est un dispositif de mesure de courant (81) qui mesure le courant à travers la ligne d'alimentation (70).

7. Station de charge (10) selon l'une des revendications précédentes,
**caractérisée en ce que**
- la ligne d'alimentation (70) est polyphasée et
- le dispositif de protection contre les surcharges à commutation automatique (80) surveille une, plusieurs ou toutes les phases de la ligne d'alimentation polyphasée (70).

8. Station de charge (10) selon la revendication 7, **caractérisée en ce que**
- le dispositif de commutation (85) présente pour chaque phase de la ligne d'alimentation polyphasée (70) un commutateur pouvant être commandé individuellement (85a-85c) et
- le dispositif de protection contre les surcharges (80) est conçu de telle sorte qu'il surveille individuellement les phases de la ligne d'alimentation polyphasée (70) et les coupe individuellement en cas de surcharge.

9. Station de charge (10) selon l'une des revendications précédentes 7 ou 8,
**caractérisée en ce que**
le dispositif de protection contre les surcharges (80) est adapté pour exécuter une coupure des phases de la ligne d'alimentation polyphasée (70) indépendamment de la symétrie de la charge de courant dans les phases de la ligne d'alimentation (70).

10. Station de charge (10) selon l'une des revendications précédentes,
**caractérisée en ce que**
- le dispositif de protection contre les surcharges (80) présente un module d'interface (84) et
- le dispositif de commande (50) du dispositif de protection contre les surcharges (80) est raccordé au module d'interface (84) de telle sorte qu'une modification des critères de déclenchement individuels de caractéristique (I16A-I70A) est possible par un paramétrage à distance via le module d'interface (84).

11. Procédé destiné à la surveillance du processus de charge d'une station de charge (10),
- au niveau de la prise de charge électrique (20) de laquelle est raccordé un câble de charge (30), d'un véhicule électrique (40), mettant à disposition une caractéristique de capacité de charge (K), et
- depuis laquelle une ligne d'alimentation (70), qui est raccordée à la prise de charge (20) de la station de charge (10) et circule via le courant de charge (I) indépendamment de la caractéristique de capacité de charge (K) du câble de charge (30) vers la prise de charge (20) de la station de charge (10), est surveillée avec un dispositif de protection contre les surcharges à commutation automatique (80), dans lequel
- en fonction de la caractéristique de capacité de charge (K) du câble de charge (30) une valeur de courant maximale associée à la caractéristique de capacité de charge (K) est lue en tant que critère de déclenchement individuel de caractéristique (I16A-I70A) dans une unité de stockage (83) du dispositif de protection contre les surcharges (80) et un dispositif de commutation (85) disposé dans la ligne d'alimentation (70) est mis hors tension en cas de surcharge, lequel est défini avec le dispositif de protection contre les surcharges (80) selon le critère de déclenchement sélectionné (I16A-I70A), **caractérisé en ce que** le dispositif de protection contre les surcharges n'active le dispositif de commutation (85) disposé dans la ligne d'alimentation (70) que lorsque la valeur de courant maximale est dépassée plus longtemps qu'un intervalle de temps prédéfini.
